(19) Europäisches Patentamt / European Patent Office / Office européen des brevets

(11) **EP 4 714 791 A1**

(12) **EUROPEAN PATENT APPLICATION**

(43) Date of publication:
**25.03.2026   Bulletin 2026/13**

(21) Application number: **24201937.0**

(22) Date of filing: **23.09.2024**

(51) International Patent Classification (IPC):
**B62D 15/02** (2006.01)    **B60R 1/26** (2022.01)
**B60W 30/09** (2012.01)    **G06V 20/58** (2022.01)
**G08G 1/16** (2006.01)

(52) Cooperative Patent Classification (CPC):
**B62D 15/0265; B60W 30/09; B62D 15/025;
G06V 20/58; G08G 1/166; G08G 1/167**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Traton AB**
**151 87 Södertälje (SE)**

(72) Inventors:
• **ANDERSSON, Jonny**
**151 68 Södertälje (SE)**

• **KHAYS, Samir**
**116 31 Stockholm (SE)**
• **SKOGLUND, Caroline**
**113 61 Stockholm (SE)**
• **HEIDENREICH, Caroline**
**125 44 Älvsjö (SE)**
• **NYBERG, Truls**
**117 66 Stockholm (SE)**

(74) Representative: **Traton AB**
**151 87 Södertälje (SE)**

(54)     **INCREASING FIELD OF VIEW THROUGH MOTION PATTERNS**

(57)     The present disclosure relates to methods for operating an articulated vehicle (1) comprising a pulling vehicle (1a) and a trailer (1b). The pulling vehicle (1a) comprises one or more sensors (11) arranged to monitor an environment of the articulated vehicle (1). The method comprises detecting (S2), in the monitored environment, an occluded region (3) in a neighbouring driving lane (4b), wherein the occluded region (3) is occluded by the trailer (1b) from a field of view of the one or more sensors (11). The method further comprises controlling (S3) the articulated vehicle (1) in its present driving lane (4a) in a view phase (VP) in which the pulling vehicle (1a) is steered towards the neighbouring lane (4b) to thereby momentarily removing the trailer (1b) from the field of view in the neighbouring lane (4b) of the one or more sensors (11). The disclosure also relates to a corresponding control arrangement and computer program, and to a vehicle comprising the control arrangement.

FIG. 9B

EP 4 714 791 A1

**Description**

Technical field

The present disclosure relates to a computer-implemented method for operating a vehicle, in particular the disclosure relates to operating a vehicle when a field of view of sensors arranged at the vehicle comprises an occluded region. The disclosure also relates to a corresponding control arrangement and computer program, and to a vehicle comprising the control arrangement.

Background

An autonomous vehicle relies on sensors on the vehicle to navigate safely. Executing lane changes autonomously requires proper sensor coverage of the neighboring lane. Sometimes the sensors are unable to detect objects in the neighboring lane because they are hidden by another object, or because of sensor limitation. Examples could be areas hidden behind other vehicles, or by the own vehicle body or trailer. Such areas may be referred to as occluded areas or occluded regions. When such regions are found, the vehicle conventionally adopts a conservative behavior with, for example, moderate or reduced velocity to ensure safety, or frequent braking. This behavior can cause discomfort to passengers and uncertainty of the vehicle's actions to the surrounding traffic, and can give rise to traffic jams and congestion. It is also not desirable to end up in a "frozen robot" situation, where the autonomous vehicle does nothing or just stops. There is therefore a need to get more information about the occluded regions in order to not overestimate the dangers.
In US2020139974A1 and US2020156633A1 it is described to at least partially unblock a field of view of a vehicle by moving the own vehicle laterally to another position in the lane that gives a better view. In US2020139974A1 it is described to have a mode of operation in case of another vehicle blocking the field of view in the back of the vehicle.
An autonomous articulated vehicle such as a truck and trailer combination where sensors are arranged on the truck but not on the trailer might introduce some difficult scenarios where the trailer blocks the field of view. The above-described disclosures do not handle such situations, and there is thus a need for improvement in this area.

Summary

It is an objective of the present disclosure to provide a method for increasing the field of view of sensors arranged on a pulling vehicle in an articulated vehicle.
These objectives and others are at least partly achieved by the method, control arrangement, and vehicle according to the independent claims, and by the embodiments according to the dependent claims.
According to a first aspect, the disclosure relates to a method for operating an articulated vehicle comprising a pulling vehicle and a trailer wherein the pulling vehicle comprises one or more sensors arranged to monitor an environment of the articulated vehicle. The method comprises detecting, in the monitored environment, an occluded region in a neighbouring driving lane, wherein the occluded region is occluded by the trailer from a field of view of the one or more sensors. The method further comprises controlling the articulated vehicle in its present driving lane in a view phase in which the pulling vehicle is steered towards the neighbouring lane to thereby momentarily remove the trailer from the field of view in the neighbouring lane of the one or more sensors. The one or more sensors can then get a better view into the neighbouring lane and better decisions can be made.
According to some embodiments, the method comprises determining an upcoming maneuver into the neighbouring lane. It is especially in these situations that it is good to have information what there is in the neighbouring lane such that better decisions can be made based on such information.
According to some embodiments, the method comprises controlling the articulated vehicle according to the view phase VP upon the determined upcoming maneuver into the neighbouring lane is hindered by the detected occluded region. Thereby more information of the occluded region can be retrieved, or the occluded region simply removed. Thus, the VP can be triggered or initiated when it is determined that the upcoming maneuver is hindered as explained.
According to some embodiments, the controlling comprises a space phase SP preceding the view phase, wherein the space phase comprises steering the pulling vehicle away from the neighbouring lane to increase the space for the articulated vehicle to perform the subsequent view phase. Thereby the following view phase can be better performed.
According to some embodiments, the controlling comprises performing the space phase SP upon a lateral distance d between an outer edge of the present driving lane and the farthest side of the pulling vehicle is greater than a set distance. Thereby it can be assured that the SP can be safely performed.
According to some embodiments, the method comprises detecting the occluded region while the articulated vehicle is driving in a curve. It is typically in such driving situations that the one or more sensors on the pulling vehicle may become occluded by the connected trailer.

According to some embodiments, the method comprising operating the articulated vehicle to perform a desired maneuver into the neighbouring lane based on the increased field of view of the one or more sensors in the neighbouring lane. The increased field of view may give more information to base the decision to drive into the neighbouring lane.

According to some embodiments, the controlling in the view phase VP comprises steering the pulling vehicle towards the neighbouring lane including increasing an angle between the pulling vehicle and a driving direction of the present driving lane thereby momentarily removing the trailer from the field of view in the neighbouring lane of the one or more sensors. Thereby the pulling vehicle is diverted towards the neighbouring lane.

According to some embodiments, the controlling in the view phase VP comprises reducing an angle between the pulling vehicle and the trailer towards zero. Thereby the occluded region can be reduced or even removed from the field of view of the one or more sensors. Actually, the VP may include to further steer the pulling vehicle such that the angle goes beyond zero and switches sign compared to the sign of the angle when the trailer was blocking the view of the sensors.

According to some embodiments, the controlling comprises a straight phase StP following the view phase in which the pulling vehicle is steered to drive in the driving direction along the present lane. Thereby the articulated vehicle can return straight in the own lane if driving into the neighbouring lane is not risk free.

According to some embodiments, the controlling is performed in consideration of one or more of traffic rules, velocity of the articulated vehicle, geometry of the articulated vehicle, steering dynamics, or lane geometry.

According to some embodiments, the detecting comprises detecting properties defining the occluded region such as distance and/or velocity.

According to some embodiments, the one or more sensors is configured to monitor the environment alongside the articulated vehicle.

According to a second aspect, the disclosure relates to a computer program comprising instructions which, when the computer program is executed by a computer, cause the computer to carry out the method according to the first aspect.

According to a third aspect, the disclosure relates to a computer-readable medium comprising instructions which, when executed by a computer, cause the computer to carry out the method according to the first aspect.

According to a fourth aspect, the disclosure relates to a control arrangement configured for operating an articulated vehicle comprising a pulling vehicle and a trailer wherein the pulling vehicle comprises one or more sensors arranged to monitor an environment of the articulated vehicle. The control arrangement is configured to detect, in the monitored environment, an occluded region in a neighbouring driving lane, wherein the occluded region is occluded by the trailer from a field of view of the one or more sensors, and control the articulated vehicle in its present driving lane in a view phase VP in which the pulling vehicle is steered towards the neighbouring lane to thereby momentarily increasing the field of view of the one or more sensors in the neighbouring lane.

According to a fifth aspect, the disclosure relates to an articulated vehicle comprising the control arrangement according to the fourth aspect. Corresponding effects as for the first aspect can be achieved by the second to fifth aspects.

Brief description of the drawings

The embodiments disclosed herein are illustrated by way of example, and not by way of limitation, in the figures of the accompanying drawings. Like reference numerals refer to corresponding parts throughout the drawings, in which:

Fig. 1A illustrates an ego vehicle in an environment with other traffic participants.

Fig. 1B illustrates an ego vehicle in an environment with other traffic participants and various occluding objects.

Fig. 2 illustrates an ego vehicle where the proposed technique may be implemented.

Fig. 3 illustrates part of an articulated vehicle in a lane and relevant direction vectors and angles.

Fig. 4 illustrates conservative possible velocities in an occluded region.

Fig. 5 illustrates an articulated vehicle driving in a lane where the sensors on the vehicle have full sight in their respective line of sight.

Figs. 6 and 7 illustrate example scenarios where the proposed technique may be used to achieve less restrictive driving.

Fig. 8 is a flow chart of computer-implemented methods for operating an articulated vehicle according to the first aspect.

Figs. 9A-9D illustrate example scenarios when using the proposed technique according to some embodiments of the disclosure.

Fig. 10 illustrates a control arrangement configured to perform the proposed method.

Detailed description

The present disclosure describes methods for handling occluded regions not visible to an articulated vehicle as the trailer limits the field of view of sensors arranged on the vehicle. When the road is straight this is typically not a problem, but on curved roads it is common that the front corner of the trailer blocks the field of view of the sensor, or sensors, arranged on the pulling vehicle. The methods include specific motion patterns designed to reduce the blockage of the sensor view caused by the trailer. When an increased view into the neighboring lane has been achieved, the articulated vehicle has more information to base a desired maneuver on, for example a lane changes into the neighboring lane. Thereby the field of view of the sensors can be increased without mounting extra sensors on the trailer. This is beneficial as trailers are often changed when driving on different missions, and it is unsafe to rely on that all trailers are equipped with sensors, and it is also expensive to equip all trailers with sensors.

The proposed technique is based on modelling the environment and prediction of the traffic in the environment. For better understanding of the proposed technique, an example model for determining a trajectory of a vehicle based on predicted traffic in the environment will first be described with reference to a general example. Thereafter particular methods are described that may be based on such models and predictions to provide a feasible and safe trajectory for an ego vehicle 1, that for example is an articulated vehicle 1.

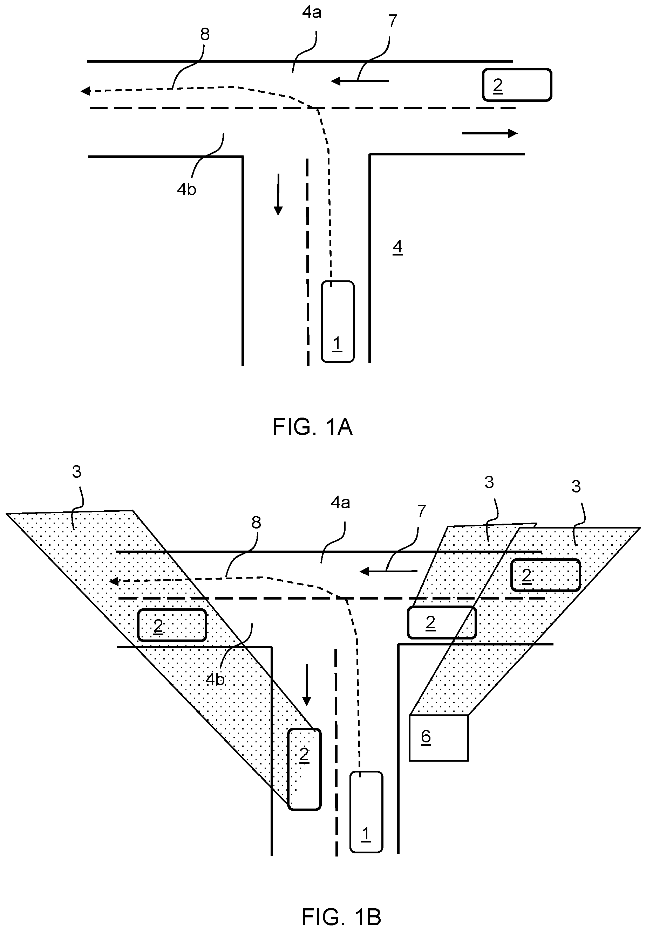

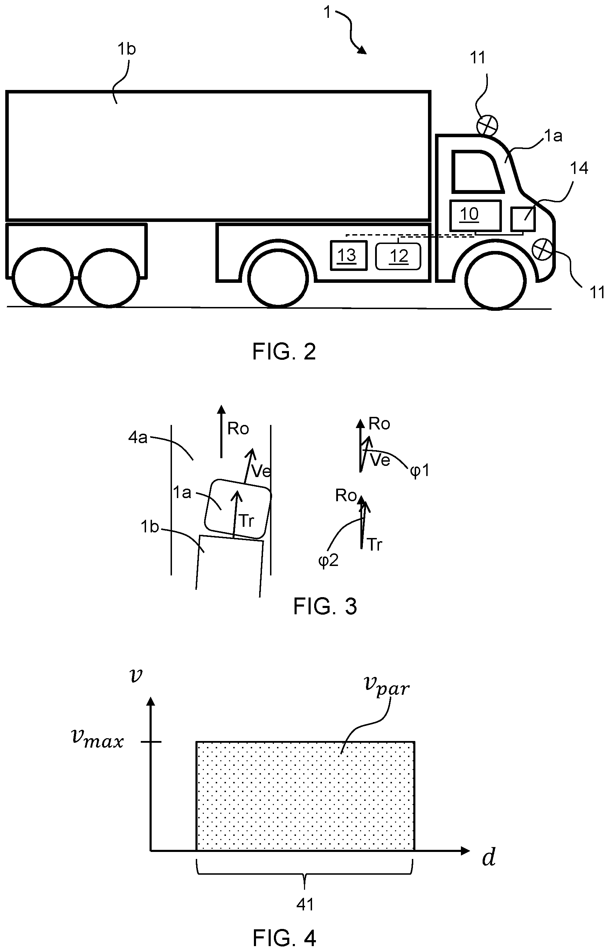

FIG. 1A illustrates an environment of an articulated vehicle 1 in an upcoming T-intersection. Traffic participant 2 is shown driving on lane 4a of lanes 4a, 4b in the direction of traffic (illustrated with arrows). Traffic participant 2 does not occlude any relevant part of the road for the articulated vehicle 1. The traffic participant 2 is visible in the field of view of sensors 11 (Fig. 2) on the articulated vehicle 1 and the traffic can easily be predicted. Once traffic is predicted, a feasible and collision-free trajectory can be formed for the articulated vehicle 1.

**Modelling the environment**

The environment comprises a set of traffic participants, including the articulated vehicle 1 and other participants 2. The model involves using reachable sets as predictions of other traffic participants (including all types of traffic participants such as trucks, cars, bikes etc.). In other words, a traffic participant 2 at a time $t$ is represented as a set of states

$$\mathcal{X}(t) \subset \mathbb{R}^n.$$

. Each traffic participant 2 is modeled as $M := \langle f^M, \mathcal{X}^M, U^M \rangle$, where $\dot{x}(t) = f^M(x(t),u(t))$ denotes the state dynamics, $\mathcal{X}^M \subseteq \mathbb{R}^n$ denotes the admissible set of states, and $U^M \subseteq \mathbb{R}^n$ the admissible set of inputs. An occupied space $\mathcal{O}$ ($t$) is a set of points in the $xy$-plane occupied by other traffic participants, namely $\mathcal{O}(t) = proj_{xy}(X^0(t))$, where $X^0(t)$ is the set of all other traffic participants' states at time $t$. The field of view $\mathcal{F}(t)$ is the set of points on the xy-plane, $\mathcal{F}(t) \subset \mathbb{R}^2$, within direct line of sight of a vehicles' sensors, and within the sensors' range. The notion of occupied space and field of view are given from the ego vehicle's perspective. The set of valid states for a traffic participant is $X^{valid} =$

$$\{x \in \mathbb{R}^n \mid proj_{xy}(x) \in \mathcal{L} \wedge x \in \mathcal{C}\},$$

where $\mathcal{L} \subseteq \mathbb{R}^2$ is the legal drivable area and $\mathcal{C} \subseteq \mathbb{R}^n$ are constraints (e.g., a heading constraint $c_\varphi$ or a velocity limit $c_v$). In one embodiment, it is assumed that traffic participants 2 such as cars, trucks and motorcycles can be modelled accurately using a non-linear bicycle model ("bic") described in R. Rajamani, Vehicle Dynamics and Control, Mechanical Engineering Series, Boston, MA, Springer, US, 2012, $M_{bic} := \langle f^M, \mathcal{X}^M, U^M \rangle$, where

$$f^{bic} := \begin{cases} \dot{x}(t) = v(t)\cos\bigl(\varphi(t)\bigr), \\ \dot{y}(t) = \mathrm{v(t)}\sin\bigl(v(t)\bigr), \\ \dot{\varphi}(t) = v(t)\tan(\theta(t)/L) \\ \qquad \dot{v}(t) = a(t), \end{cases}$$

$$\mathcal{X}^{bic} := \mathcal{X}^{valid}, \qquad\qquad (equation\ 1)$$

$$U^{bic} := \bigl\{ \theta \in [-c_\theta, c_\theta],\ a \in [c_{a,min}, c_{a,max}] \bigr\}$$

The model has state variables $x$, $y$, an orientation $\varphi$, and a velocity $v$. The length between the front and rear axle, the wheelbase, is denoted $L$. As input, the model takes a steering angle $\theta$ and an acceleration $a$. $c_{a,min}$, $c_{a,max}$, and $c_\theta$ are constraints on the acceleration $a$ and steering angle $\theta$. The x-coordinate may be assumed to be aligned with driving direction of the ego vehicle's lane, and the heading of all other traffic participants are assumed to be in the interval $[-c_\varphi, c_\varphi]$ with $c_\varphi \leq \pi/2$ during the relevant time horizon.

The reachable set of states of the non-linear bicycle model may be difficult to compute or directly overapproximate. However, reachable sets can be computed for several linear model abstractions and then combined. The model abstractions are a type of model of how the states of traffic participants change over time. They are simplifications of the original model (equation 7). It might also be desired to overapproximate the set of reachable states to ensure safe properties of the system. The reachable set of states may be over-approximated by adding the system's (equation 1) homogenous and inhomogeneous solutions together and considering infinitely many terms in the sum. In one example embodiment, a first model abstraction $M_{vel}$, that over-approximates the reachable set of states in $(x,y)$, is combined with a second model abstraction, $M_{acc}$, that over-approximate the reachable set of states in $(x, v)$.

The first model abstraction, $M_{vel} := \bigl\langle f^{vel}, \mathcal{X}^{vel}, U^{vel} \bigr\rangle$ is a simple integrator model. The model is linear and only has two states, $x$ and $y$, and two inputs $v_x$ and $v_y$. Since the states are directly controlled by the input, the system matrix is $A_{vel} = 0$. With $M_{vel}$ possible velocities are used to overestimate which positions a traffic participant can reach (in xy-coordinates). Hence, if a traffic participant has any position $(x_1, y_1)$ in the set $X_1$ at a first time instance $t_1$ then its position $(x_2, y_2)$ at time $t_2$ must be in the set $X_2$. Then an over-approximation of $X_2$, denoted $\hat{R}(M_{vel}, proj(X_1), t_2 - t_1)$, is calculated.

A second model abstraction, $M_{acc} := \bigl\langle f^{acc}, \mathcal{X}^{acc}, U^{acc} \bigr\rangle$ describes traffic participants' dynamic behavior along the x-axis as a double integrator system. It has two states, $x$ and $v$, and one inputs $a_x$. Being linear and time-invariant, the model may be represented in the state-space form $\dot{x}(t) = A_{cc}x(t) + u(t)$, with

$$A_{acc} = \begin{bmatrix} 0 & 1 \\ 0 & 0 \end{bmatrix}$$

Since the bicycle model's reachable states in $(x,v)$ are governed by the double integrator dynamics, the abstraction is to change of input from $a$ to $a_x$. To translate the constraints on heading and velocity, it is identified that maximum reach in $x$ is achieved with maximal acceleration and zero heading, and minimum reach is achieved with minimum acceleration and maximal heading. With $M_{acc}$ possible accelerations are used to overestimate which velocities a traffic participant can reach at different positions (in xv-coordinates). Hence, if a traffic participant has any position and velocity combination $(x_1, v_1)$ in the set $X_1$ at a first time instance $t_1$ then its position and velocity $(x_2, v_2)$ at a second time instance $t_2$ must be in the set $X_2$. Then an over-approximation of $X_2$, denoted $\hat{R}(M_{acc}, proj_{xv}((X_1), t_2 - t_1))$, is calculated.

In some embodiments, an over-approximation of the reachable set of states from $M_{vel}$ is the initial set of states, Minkowski summed with the time-scaled input set. In some embodiments, an over-approximation of the reachable set of states from $M_{acc}$ is a skewing of the initial set of states in x and Minkowski summing it with a time-scaled version of the input set. With these insights, the first and second abstractions can be combined to over-approximate the original bicycle model. Thereby, the reachable set of states at a time $\tau + \Delta t$, for a traffic participant currently in the set of states $X_\tau$, can be over-approximated such that:

$$\mathcal{R}(M_{bic}, \mathcal{X}_\tau, \Delta t) \subseteq (\hat{\mathcal{R}}\bigl(M_{vel}, proj_{xy}(\mathcal{X}_\tau), \Delta t\bigr) \times \mathbb{R}_v \cap$$

$$\mathcal{T}_{xyv}\bigl(\hat{R}(M_{acc}, proj_{xv}(\mathcal{X}_\tau), \Delta t) \times \mathbb{R}_v\bigr) \cap \mathcal{X}^{valid} \qquad (equation\ 2)$$

where the mapping $\mathcal{T}_{xyv}$ : $(x,v,y) \rightarrow (x,v,y)$ to correct the element order after the Cartesian products with the missing dimensions. The over-approximated reachable set of states is denoted $\hat{R}(M_{bic}, X_\tau, \Delta t)$. Hence, for each traffic participant an over-approximated reachable set of states can be determined, that can be used when planning a trajectory for the ego vehicle 1.

FIG. 1B illustrates the same environment of articulated vehicle 1 as in Fig. 1A, but with occluding objects in the field of view of the sensors 11 on articulated vehicle 1. The occluded objects here are both other traffic participants 2 and a stationary object 6. The occluding objects occlude parts of the environment, referred to as occluded regions 3 (i.e. an occluded area), from the field of view of the sensors 11 on the articulated vehicle 1. Articulated vehicle 1 needs to predict possible traffic participants also in these occluded regions 3 to make a feasible and safe trajectory. Hence, the possible traffic participants also need to be included in the model. This is done by creating one or more "ghost" traffic participants in the occluded regions 3, referred to as "possible traffic participants".

**Tracking of possible traffic participants**

Tracking of possible traffic participants may be done using the same model as for observed traffic participants with the difference that several parameters, like position, velocity and steering angle of possible hidden objects are unknown. Hence, the set of states for possible hidden traffic participants must be estimated based on the field of view and a model of other traffic participants. For a traffic participant to be hidden, its projection $proj_{xy}(x)$ into the $x, y$ -plane must fall inside the occluded region, as otherwise it would be observed. Hence, given an initial field of view, $F_0$, and a set of valid states, $X^{valid}$, the initial possible traffic participants' states are:

$$\hat{P}_0 = \{x \in \mathcal{X}^{valid} \mid proj_{xy}(x) \notin F_0\}.$$

However, when an occluded region is observed over time the number of reachable sets $P_x$ changes. More specifically, at subsequent time steps, a possible traffic participant state must be outside the field of view at that time step and have been reachable from previous sets of possible participants' states.

Hence, at each time instance $t$, all possible states that a hidden (possible) traffic participant can have are calculated. The states in the previous time step $t - \Delta t$ are projected down in the xy-plane to obtain all possible positions that a previously unseen traffic participant may have had. The states in the previous time step $t - \Delta t$ are also projected down in the xv-plane to obtain all possible velocities that a previously unseen traffic participant may have had at various positions along x. Thereafter the positions that are reachable from the previous time $t - \Delta t$ to time $t$, are overapproximated. A velocity dimension is added such that $R_{vel}$ can be interpreted as a volume. It is thereafter overapproximated which velocities and respective positions along $x$ that are reachable from previous time $t - \Delta t$ to time $t$. A dimension in $y$ is added such that $R_{acc}$ can be interpreted as a volume. Thereafter an over approximation of an intersection of three volumes to obtain all reachable states $R_{bic}$ (the intersection is the amount of overlap between the volumes) is made. The first volume $R_{vel}$ is reachable positions (with free velocity), the second volume is reachable velocities along $x$, and the last volume $X^v$ is the allowed states given by a map (e.g., positions within a file with a limited velocity). The volumes are arranged in the same coordinate system. Thereby all reachable states $R_{bic}$ inside the occluded region 3 can be obtained. These states are added to the reachable set of states $X_\tau$.

**Trajectory planning with occluded regions**

The over-approximated reachable set in (*equation 2*) can be computed over time intervals to predict traffic participant's states at future time steps. To guarantee that the planned trajectory is collision free in between two consecutive time steps, the reachable set of states should be computed for the N time intervals between each state in the planned trajectory. The reachable set of states can then be projected on the *xy*-plane to find the space that may be occupied during the time intervals. The predicted occupied space is the space in xy that may be occupied by possibly hidden traffic participants during a time interval, given a set of possible traffic participant states at a time *t*. The modelled environment can then be used to plan in consideration of predicted occupancies. The trajectory 8 is found by solving a planning problem, namely given a certain field of view $\mathcal{F}_\tau$ , a model for the articulated vehicle 1 (also referred to as ego vehicle), $M_{ego}$, and a model for other traffic participants $M_{other}$ (including possible hidden ones), find the best feasible trajectory $T$ (given a cost function) that is guaranteed to be collision-free.

More specifically, an algorithm is defined, which takes the current set of ego states, together with a tracked set of observed traffic participants' as well as possible traffic participants' states as input. It is assumed that the other traffic participants are responsible in the sense that they ensure a safe distance to others when changing lanes or approaching vehicles from behind. In short, the algorithm includes three steps. First all possible trajectories of the articulated vehicle 1 are identified. Thereafter, all safe trajectories i.e., all trajectories that do not collide with any of the observed or possible traffic participants, are identified from the possible trajectories. If there are several possibilities the best trajectory is selected based on optimization criteria, such as driving time, power efficiency and driver comfort.

Fig. 2 illustrates an articulated vehicle 1 where the proposed technique may be implemented. An articulated vehicle is a non-rigid vehicle. Such a vehicle comprises two or more bodies connected in series by a respective coupling. The articulated vehicle 1 may be fully autonomous or at least partly manual. Articulated vehicle 1 comprises a pulling vehicle 1a and a trailer 1b. The pulling vehicle 1a is for example a truck or a tractor. The pulling vehicle 1a and trailer 1b are connected via a coupling (not shown). The coupling is for example a pivot joint, or any other suitable joint. The coupling enables a preceding body to turn relative to a succeeding body, or opposite. Each of the pulling vehicle 1a and trailer 1b comprises two axes, but could alternatively have more or less axes. Articulated vehicle 1 in Fig. 2 includes one trailer 1b, but may alternatively include more trailers such as two or three, or more, trailers connected in series with a respective coupling to a trailer.

The pulling vehicle 1a of articulated vehicle 1 comprises a plurality of electric systems and subsystems. For simplicity only some parts of the articulated vehicle 1 that are associated with the proposed method are shown in Fig. 2. Thus, the illustrated pulling vehicle 1a of Fig. 2 comprises a plurality of sensors, a propulsion system 12, a braking system 13 and an autonomous driving function 14. The plurality of sensors comprises one or more sensors 11 configured to sense the environment of the pulling vehicle 1a and/or articulated vehicle 1. The one or more sensors 11 may be embodied as sensor devices. For example, the one or more sensors 11 may include one or more of Lidar, Radar, image and/or proximity sensors. The one or more sensors 11 may be configured to detect objects in the environment, such as other traffic participants 2 and other objects 6. The one or more sensors 11 are also configured to estimate size, position and velocity of detected objects using commonly known techniques.

The propulsion system 12 is designed to propel the vehicle. The propulsion system typically comprises a combustion engine and/or an electrical motor. The braking system 13 is arranged to decelerate vehicle 1. The braking system typically comprises several different braking systems that interact, such as main brakes and auxiliary brakes.

The autonomous driving function 14 is configured to control driving operation of the vehicle 1. In some embodiments the articulated vehicle 1 and/or pulling vehicle 1a is fully autonomous. In these embodiments the autonomous driving function 11 may comprise a mission handler configured to receive missions from an operator or off board control system. In these embodiments, the autonomous driving function 14 is configured to calculate a trajectory for the articulated vehicle 1 to drive and to control driving along the trajectory. The autonomous driving function 14 controls operation of the articulated vehicle 1 by sending commands to the propulsion system 12, to the braking system 13 and to other systems, such as to a steering system (not shown).

In other embodiments, the articulated vehicle 1 is at least partly manual. The autonomous driving function 14 may then be configured to control the articulated vehicle 1 in certain situations, such as when the function is activated by a driver or as a safety system in order to avoid accidents. In some embodiments, the autonomous driving function 14 is an Advanced Driver-Assistance System, ADAS.

In the following figures the neighboring lane is illustrated to be on the right on the own lane for ease of illustration, but it should be understood that the neighboring lane instead can be located on the left on the own lane. As understood, the illustrations in the figures will then be mirrored.

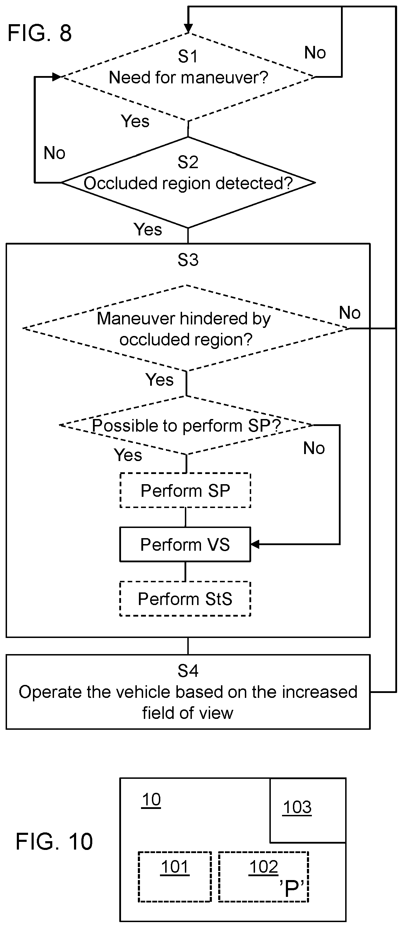

Fig. 3 illustrates an articulated vehicle 1 driving along a lane 4a. The driving direction along the lane 4a is indicated with an arrow Ro. The driving direction of the pulling vehicle 1a is indicated with the arrow Ve and the driving direction of the trailer is indicated with the arrow Tr. An angle between the driving direction Ro and the driving direction Ve of the pulling vehicle 1a is indicated with $\varphi 1$. This angle $\varphi 1$, hence the orientation of pulling vehicle 1a, is for example estimated with self-localization methods. Such methods are for example estimating the position of the pulling vehicle 1a in the environment by using several types of input signals. Examples of a sensor giving such input signal are accelerometer, gyroscope, wheel angle sensor, wheel speed sensor, GPS (Global Positioning System), etc. An angle between the driving direction Ro and the driving direction Tr of the trailer 1b is indicated with $\varphi 2$. The articulation angle $\beta$ between pulling vehicle 1a and the trailer 1b is the difference between $\varphi 1$ and $\varphi 2$. The articulation angle $\beta$ may be measured or estimated as known in the area. For example, a model of the articulation angle $\beta$ may be based on one or more of kinematics of the articulated vehicle 1, a measure indicative of a turning angle $\varphi 1$ of the pulling vehicle 1a of the articulated vehicle 1, such as a steering angle or a wheel angle, and a velocity v of the pulling vehicle 1a, or simply obtained by a sensor measuring the angle. The vehicle's kinematics are typically known beforehand and saved in a memory means 102 (Fig. 10) in the pulling vehicle 1a. Any of the above-mentioned signals may be retrieved from a controller area network (CAN), for example the steering angle as measured by a steering angle sensor, the wheel angle as measured by a wheel angle sensor or velocity v as measured by a velocity sensor.

Fig. 4 illustrates possible conservative velocities of a possible traffic participant in an occluded region 3 in a diagram. The y-axis depicts the velocity $v$, and the x-axis the length d of the occluded region 3 in the driving direction 7. $v_{max}$ denotes a predetermined maximum velocity of the road, determined as a possible maximum feasible velocity of a vehicle travelling along the road. Reference 41 denotes the length of the occluded region 3. This diagram shows a conservative view of a possible traffic participant, where it is determined that a possible traffic participant can be located at any position along the length 41 of the occluded region 3 and can have any velocity from zero to $v_{max}$. The velocity interval is thus from zero to $v_{max}$. Hence, if the occluded region continues to be occluded, it must be assumed that a possible traffic participant in the occluded region can be at any place in the diagram. With the present invention, such occluded regions may be removed and any previously hidden traffic participant in the occluded region becomes known.

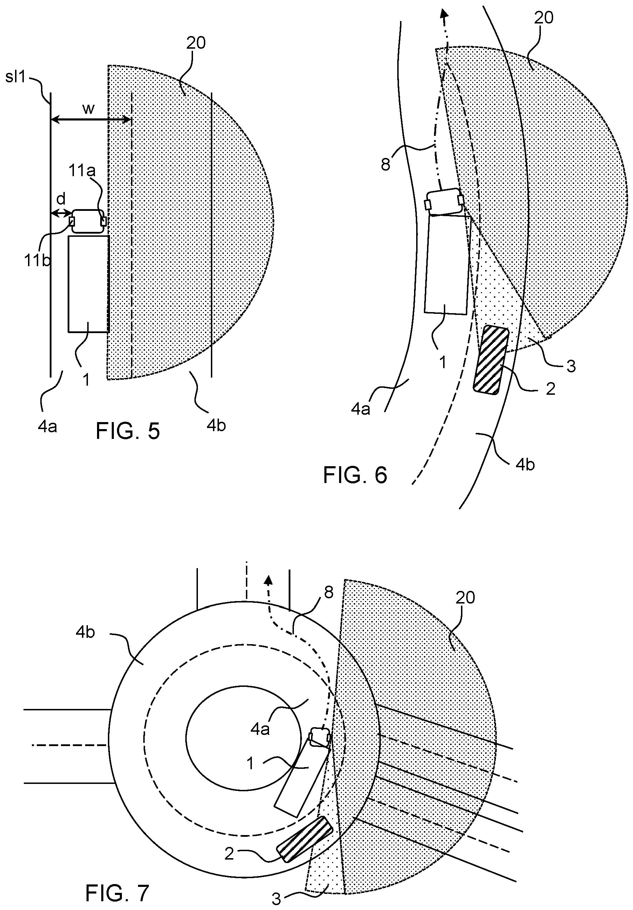

Fig. 5 illustrates an articulated vehicle 1 driving in lane 4a where the sensors 11 on the pulling vehicle 1a have full sight in their respective line of sight. The articulated vehicle 1 is driving straight along the lane 4a along the driving direction of the lane 4a. The vehicle 1 has one or more sensors 11 mounted on the vehicle 1. One or more sensors 11a are here mounted on the pulling vehicle 1a such that a 180° field of view 20 into the neighboring lane 4b is achieved when the articulated vehicle 1 is driving along the driving direction of the lane 4a and the lane 4a is straight. The field of view (FoV) is the extent of the observable environment at any given moment, and typically defined by an angular range. The range of the sensor is the maximum distance the sensor can accurately detect objects. The one or more sensors 11a are typically mounted on the side (left or right, here the right-hand side) of the pulling vehicle 1a and angled forward, backward, directly to the side or in any combination of these directions. The articulation angle $\beta$ is then zero, hence, the pulling vehicle 1a and the trailer 1b have the same driving direction. The width of the lane 4a is indicated with w. The lateral distance d is a distance between the farthest sideline of the present driving lane 4a from the neighbouring lane 4b and the farthest side of the pulling vehicle 1a from the neighbouring lane 4b. In Fig. 5 it is the distance between the left-hand side of the pulling vehicle 1a and the left sideline sl1 of pulling vehicle 1a. It should be noted that the pulling vehicle 1a has one or more other sensors 11b mounted on the opposite side of the pulling vehicle 1a as the one or more sensors 11a. These other one or more sensors 11b have the same functionality as the one or more sensors 11a. For example, the other one or more sensors 11b are mounted on the pulling vehicle 1a such that a 180° line of sight into the neighboring lane (not shown) is achieved when the articulated vehicle 1 is driving along the driving direction of the lane 4a and the lane 4a is straight. The one or more sensors 11b are typically mounted on the side (here the left-hand side) of the pulling vehicle 1a and angled forward, backward, directly to the side or in any combination of these directions.

Figs. 6 and 7 illustrate scenarios where the field of view 20 of the one or more sensors 11 of pulling vehicle 1a is blocked by a corner of the connected trailer 1b. In Fig. 6 the articulated vehicle 1 is driving in a curve of a curved road and the corner of the trailer 1b comes in the field of view of the one or more sensors 11. In Fig. 7 the articulated vehicle 1 is driving in a roundabout and the corner of the trailer 1b comes in the field of view of the one or more sensors 11. Hence, the corner of the trailer obstructs the field of view and an occluded region 3 is obtained indicated as a differently dotted part of the field of view 20. A traffic object 2 in the shape of a car is hidden in the occluded region 3. In Fig. 6, the lane 4a where the articulated vehicle 1 is driving in will soon merge into the neighbouring lane 4b whereby the articulated vehicle 1 wants to make a lane change according to the trajectory 8 into the neighbouring lane 4b. There is then a risk that the articulated vehicle 1 will, for example, drive into the hidden vehicle. As the articulated vehicle 1 does not know what is hidden it will need to have an overly cautions driving behaviour, for example reduce its speed to a very low speed or even stop. In Fig. 7 the articulated vehicle 1 is driving in lane 4a and soon wants to exit the roundabout by making a lane change into the neighbouring lane 4b and further into another road that exits the roundabout according to the trajectory 8. There is then a risk that the articulated vehicle 1 will also here, for example, drive into the hidden vehicle. As the articulated vehicle 1 does not know what is hidden it will need to have an overly cautions driving behaviour, for example reduce its speed to a very low speed or continue driving in the lane 4a and not exit the roundabout.

Fig. 8 is a flow chart of computer-implemented methods for operating an articulated vehicle according to the first aspect. The methods may be implemented as a computer program comprising instructions which, when the program is executed by a computer (e.g., a processor in the control arrangement 10 (Fig. 10)), causes the computer to carry out the methods. According to some embodiments the computer program is stored in a computer-readable medium (e.g., a memory or a compact disc) that comprises instructions which, when executed by a computer, cause the computer to carry out the methods. In some embodiments, the methods are implemented in a control arrangement 10 of a vehicle 1, e.g., in the vehicle 1 of Fig. 2. Hence, the disclosure relates to a method for operating an articulated vehicle 1 comprising a pulling vehicle 1a and a trailer 1b wherein the pulling vehicle 1a comprises one or more sensors 11 arranged to monitor an environment of the articulated vehicle 1.

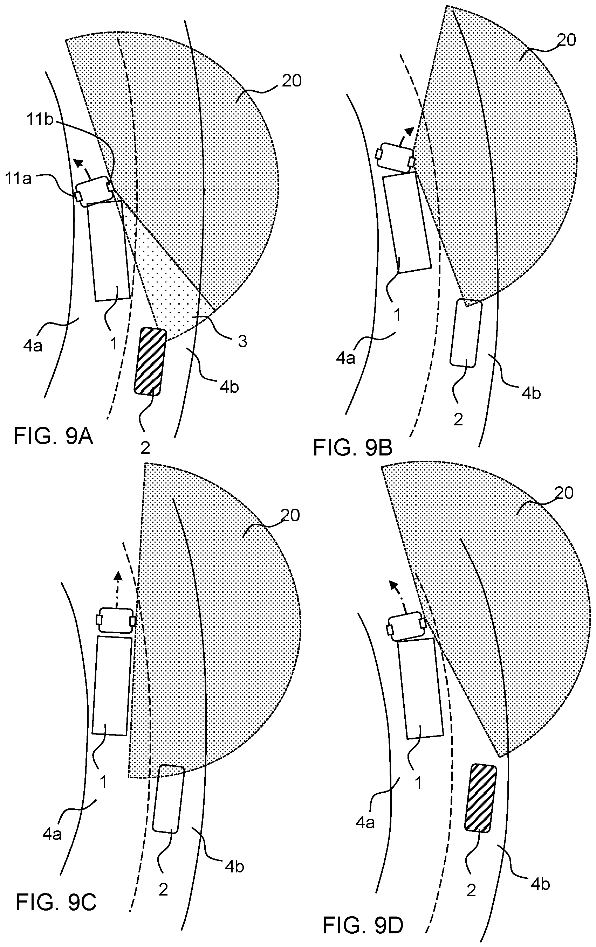

These methods will be explained in the following with reference to the flow chart and to the example scenarios in Figs. 9A-9D when using the proposed technique according to some embodiments of the disclosure. Any of the methods can be performed automatically or autonomously in the control arrangement 10 of the articulated vehicle 1 when driving on a road, for example driving on a curve.

As previously explained, the environment of the articulated vehicle 1 is continuously monitored by the sensors 11 of the vehicle 1. Also, a trajectory for the articulated vehicle 1 is planned, based on inter alia the monitored environment, one or more goal destinations, map information and the position of the articulated vehicle 1. The method may for example comprise determining S1 an upcoming maneuver into the neighbouring lane 4b. Such a maneuver may for example be determined when there is a need to drive into the neighbouring lane, for example when the lane 4a the articulated vehicle 1 is driving in soon will merge into the neighbouring lane 4b or because the articulated vehicle 1 is driving in a roundabout and needs to change lane as it will exit the roundabout into another road, as illustrated in Figs. 6 and 7. Based on inter alia the data from the sensors 11, the method determines if and how the maneuver can be made. When performing the method, the method only relies on the monitoring by the one or more sensors 11 arranged on the pulling vehicle 1a. Hence, the method do not include any sensor data from any sensors arranged on trailer 11b. The method only includes sensor data from the one or more sensors 11 arranged on the pulling vehicle 1a. The environment is continuously modelled using data from the one or more sensors 11 on the vehicle 1. The one or more sensors 11 are for example configured to monitor the environment alongside the articulated vehicle 1. For example, the one or more sensors 11 include a sensor 11a arranged to monitor the region to the right of the articulated vehicle 1. The one or more sensors 11 also include a sensor 11b arranged to monitor the region to the left of the articulated vehicle 1. A sensor typically has a field of view (FoV) that is known beforehand and in which the sensor should be able to detect objects, e.g., traffic participants, in the environment. If the FoV for a sensor is occluded, the occlusion is detected by the same sensor as a lack of sight in its FoV, or in other words, an occluded region in its FoV. When the articulated vehicle 1 turns, one of the sensors 11a, 11b arranged to monitor the region on the outside of the turn might become occluded by the trailer 1b, more in detail by a front outer edge of the trailer 1b. The data from the occluded sensor 11a, 11b will then contain this information of an occluded FoV, and the method can detect the occluded region by for example comparing the data with data from a previous FoV where it is known that there was no occluded region in the FoV. In other words, the method comprises detecting S2, in the monitored environment, an occluded region 3 in a neighbouring driving lane 4b, wherein the occluded region 3 is occluded by the trailer 1b from a field of view of the one or more sensors 11. The method may also use map data to know that the occluded region 3 is in the neighbouring driving lane 4b. The detecting S2 may comprise detecting properties defining the occluded region 3 such as distance and/or velocity. The outer edge of trailer 1b refers to the edge that is farther from the curve's center compared to the inner edge of the trailer 1b. Simply put, the trailer 1b has four edges, two front and two rear, connected by its short and long sides. When the trailer 1b turns, one front edge and one rear edge becomes the outer front edge and the outer rear edge, respectively, where these are the edges that are farther from the center of the curve than the corresponding other front edge and rear edge that becomes the inner front edge and inner rear edge of the trailer 1b during the turn. As understood, an occluded region that is occluded by the trailer 1b will typically occur when the articulated vehicle 1 is driving in a curve where the articulation angle $\beta$ is separated from zero. In other words, the method comprises detecting S2 the occluded region 3 while the articulated vehicle 1 is driving in a curve.

The method may now determine that the occluded region is relevant for deciding how to control the articulated vehicle 1. For example, it includes a risk of collision with a potentially hidden traffic participant in the occluded region to perform the planned trajectory involving, e.g., a lane change into the neighbouring lane. Hence, the method may determine that the determined S1 upcoming maneuver into the neighbouring lane 4b is hindered by the detected S2 occluded region 3. This is typically determined based on the previously explained modelling of the environment, where it is considered that a traffic participant 2 may be hidden in the occluded region. Without any more information, the method may assume that this potential hidden traffic participant 2 has any velocity and position illustrated in Fig. 4. The method will predict trajectories for these potentially hidden traffic participants assuming that they may have any velocity and position (Fig. 4) in the occluded region. A trajectory of the articulated vehicle 1 including a change of lane into the neighboring lane may then include a risk of collision with any of the predicted trajectories of the potential hidden traffic participant 2, and thereby hinder the upcoming maneuver. However, by increasing the FoV of the sensor 11 (which was occluded) by making specific movements with the articulated vehicle 1, the occluded region can at least to some extent be removed and any potential hidden traffic participant 2 detected. The confidence in making a lane change can then be increased. If another traffic participant is detected, it can be assured that the lane change manoeuvre is not safe to perform. However, the method may also want to increase the FoV without having any upcoming maneuver that might be hindered. This simply to get as much information as possible of the environment to create greater awareness. In any way, to increase the FoV when an occluded region 3 is found in the neighbouring lane, the method comprises making "swerving motions". "Swerving motions" are sudden, sharp changes of direction of the articulated vehicle 1 in its present lane. Such one or more "swerving motions", when made in a way related to the detected occlude region, may increase the FoV of the occluded sensor. The "swerving motions" may include a space phase SP, a view phase VP and a straight phase StP. The motions in the different phases are typically based on one or more of road curvature, lane width/geometry, traffic rules, geometry of the articulated vehicle 1, steering dynamics of the articulated vehicle 1 and/or velocity of articulated vehicle 1, to as much as possible reduce the occluded region in the neighbouring lane 4b. The SP includes controlling the articulated vehicle 1 to a place as far as possible away from the neighbouring lane, within the own lane. Thereby the articulated vehicle 1 will get more space to perform the subsequent VP. In other words, the method comprises controlling S3 the articulated vehicle 1 in a space phase SP wherein the SP comprises steering the pulling vehicle 1a away from the neighbouring lane 4b to increase the space for the articulated vehicle 1 to perform the subsequent view phase VP. A goal for the steering in the SP is to place the pulling vehicle 1a as far as possible away from the neighbouring lane, within the own lane. In the figures this means on the left side in the own lane. The SP can typically be made if there is space to perform the manoeuvre, hence, the vehicle 1 still can be kept in the same lane, does not come too close to other traffic participant or objects, and can continue driving in the own lane. One example of a SP is illustrated in Fig. 9A. In Fig. 9A, there is an occluded region 3 in the neighbouring lane 4b as the front right corner of the trailer 1b occludes the FoV 20 of the sensor 11b on the righthand side of pulling vehicle 1a. A traffic participant 2 is located in the neighbouring lane 4b partly in the occluded region 3 and would have been visible by the sensor 11b if the FoV 20 would not have been occluded. The articulated vehicle 1 is during normal driving placed in the middle of the lane it is driving in. Depending on the width of the lane and the width of the articulated vehicle 1, there might be some space between the articulated vehicle 1 and the sideline of the lane 4a where the articulated vehicle 1 can move into. In Fig. 9A, there is some room for performing the SP to the left-hand side of the articulated vehicle 1 as the distance d (Fig. 5) is sufficiently large. In other words, in some embodiments, the controlling S3 comprises performing the SP upon a lateral distance d between an outer edge of the current driving lane and the farthest side of the pulling vehicle is greater than a set distance The distance d is typically determined based on sensor data from the one or more sensors 11 (in Figs. sensor 11b). The set distance pd may be determined based on one or more of experiments, road conditions, velocity of articulated vehicle 1 and/or distance to neighbouring traffic participants. Hence, the distance d needs to be sufficiently large such that the articulated vehicle 1 in a safe way can move the articulated vehicle 1 to reduce the distance d to, at most, the set distance pd. Hence, the SP may include reducing the distance d to the set distance pd. The articulated vehicle 1 will then be placed close to the side lane of the lane 4a that is farthest from the neighbouring lane 4b. It will then get a larger distance to perform the VP along. For example, if only a small part of the neighbouring lane is occluded, then only a short VP is needed and thus a small set distance pd to accommodate the maneuvers. On the other hand, if a larger part of the neighbouring lane is occluded, for example if the road has a large curvature, then a longer VP might be needed to create a better angle into the neighbouring lane.

Independent upon if the SP has been performed or not, the method comprises controlling S3 the articulated vehicle 1 according to the view phase VP. One example of a VP is illustrated in Fig. 9B and comprises controlling the articulated vehicle 1 to steer (back) towards the neighbouring lane, but still keeping the articulated vehicle 1 within its own lane. More in detail, the method comprises controlling S3 the articulated vehicle 1 in its present driving lane 4a in a view phase VP in which the pulling vehicle 1a is steered towards the neighbouring lane 4b to thereby momentarily removing the trailer 1b from the field of view in the neighbouring lane 4b of the one or more sensors 11. With such controlling, with reference to Fig. 9B, the trailer 1b can for a short time at least partly get out of the FoV 20 of the sensor 11b that has an occluded FoV 20 because of the trailer 1b. The trailer 1b then gets in an advantageous position for maximizing the FoV 20 in the neighbouring lane. This is illustrated in Fig. 9B where the FoV 20 becomes increased and the formerly hidden traffic participant 2 becomes partly visible to the sensor 11b. "Momentarily" here means for a short time. The short time is happening during the VP, where an increased view into the neighbouring lane is achieved because the trailer 1b is at least partly removed from the FoV of the one or more sensors 11 (compared to before the maneuvers were started). The steering towards the neighbouring lane typically includes increasing an angle $\varphi 1$ (Fig. 3) between the steering direction Ve of the pulling vehicle 1a and a driving direction Ro of the driving lane the articulated vehicle 1 is driving in. It should be understood that the steering direction during the VP is towards the neighbouring lane in which the occluded region 3 was detected. In other words, controlling S3 in the view phase VP, comprises steering the pulling vehicle 1a towards the neighbouring lane 4b includes increasing an angle $\varphi 1$ between the pulling vehicle 1a and a driving direction of the present driving lane 4a thereby momentarily removing the trailer 1b from the field of view in the neighbouring lane 4b of the one or more sensors 11. In many cases, the closer the articulated angle $\beta$ is to zero, the greater the FoV 20 of the sensor 11b ( in other words, the one or more sensors). Thereby the controlling S3 in the VP may also include reducing the articulated angle $\beta$ towards zero to make the pulling vehicle 1 and the trailer 1b driving on a straight line towards the neighbouring lane. Such scenario is illustrated in Fig. 9C. Here it is illustrated that the sensor 11b has a full FoV 20 as it is not occluded anymore by the trailer 1b, and the formerly occluded region 3 is gone. The traffic participant 3 becomes more visible to the sensor 11b. In other words, in some embodiment the controlling S3 in the view phase VP comprises reducing an angle between the pulling vehicle 1a and the trailer 1b towards zero. However, the visibility into the neighbouring lane may still be increased and/or the occluded region 3 may still be removed even if the articulated angle $\beta$ is not zero. In some embodiments, the VP may include to further steer the pulling vehicle 1a such that the angle between the pulling vehicle 1a and the trailer 1b goes beyond zero and switches sign compared to the sign of the angle when the trailer 1b was blocking the view of the one or more sensors 11. Typically, the method comprising controlling S3 the articulated vehicle 1 according to the view phase VP, and potentially a preceding SP, upon the determined S1 upcoming maneuver into the neighbouring lane 4b is hindered by the detected S2 occluded region 3. However, as explained the controlling S3 may also be made simply when the one or more sensors 11 are occluded by the trailer 1b such that an occluded region 3 occurs in the neighbouring lane. The sensor data retrieved from the one or more sensors 11 during the VP is valid for a certain time, which may be dependent on traffic rules, velocities of traffic participant etc. The VP may need to be performed again if uncertainties arises or if an occluded region as again detected.

The VP may be followed by a straight phase StP where the articulated vehicle 1 is steered straight along the steering direction of the lane. Such a StP is illustrated in Fig. 9D, in which the pulling vehicle 1a is steered towards the driving direction of the own lane 4a. In other words, the controlling S3 comprises a straight phase StP following the view phase VP in which the pulling vehicle 1a is steered to drive in the driving direction along the present lane 4a. This is not strictly needed in all cases if the method can conclude that the desired maneuver (e.g., the lane change) is safe to perform and the articulated vehicle 1 can proceed with the desired maneuver instead of continuing in the lane. However, the articulated vehicle 1 always need to be able to continue in the own lane if the desired manoeuvre turns out to not be free of any risks. In other words, the method comprising operating S3 the articulated vehicle 1 to perform a desired maneuver into the neighbouring lane 4b based on the increased field of view of the one or more sensors 11 in the neighbouring lane 4b.

Fig. 10 illustrates a control arrangement 10 configured to operate the articulated vehicle 1. The control arrangement 10 may be arranged in the articulated vehicle 1 (Fig. 2). Control arrangement 10 comprises control circuitry to perform the method according to any one of the steps, examples or embodiments as described herein. The control arrangement 10 may include one or more Electronic Control Units (ECUs) connected to a controller area network (CAN). For example, the control arrangement 10 may be an Electrical Control Unit, ECU, of the ACC.

More in detail, the control arrangement 10 comprises one, or more, computer(s) 101 and memory 102. The computer 101 comprises any hardware or hardware/firmware device implemented using processing circuity such as, but not limited to, a processor, Central Processing Unit (CPU), a controller, an arithmetic logic unit (ALU), a digital signal processor, a microcomputer, a field programmable gate array (FPGA), a System-on-Chip (SoC), a programmable logic unit, a microprocessor, an application-specific integrated circuit, or any other device capable of electronically performing operations in a defined manner. In some embodiments, the computer-readable medium may be a non-transitory computer-readable medium, such as a tangible electronic, magnetic, optical, infrared, electromagnetic, and/or semiconductor system, apparatus, and/or device. The computer-readable memory is for example one or more of the memories in the control arrangement 10. Hence, the proposed method may be implemented as a computer program. The computer program then comprises instructions which, when the computer program is executed by a computer, cause the computer to carry out the method according to any one of the aspects, embodiments or examples as described herein.

In some embodiments the control arrangement 10 comprises a communication interface 103 configured to enable wireless communication with off-board devices, such as with other vehicles, road objects or with a data storage, such as a cloud server. The wireless communication may be performed using any suitable protocol for V2X communication. This communication may be performed via a Controller Area Network, CAN, or directly via an embedded modem.

More specifically, the control arrangement 10 is configured for operating an articulated vehicle 1 comprising a pulling vehicle 1a and a trailer 1b wherein the pulling vehicle 1a comprises one or more sensors 11 arranged to monitor an environment of the articulated vehicle 1. The control arrangement 10 is configured to detect, in the monitored environment, an occluded region 3 in a neighbouring driving lane 4b, wherein the occluded region 3 is occluded by the trailer 1b from a field of view of the one or more sensors 11. The control arrangement 10 is further configured to control the articulated vehicle 1 in its present driving lane 4a in a view phase VP in which the pulling vehicle 1a is steered towards the neighbouring lane 4b to thereby momentarily increasing the field of view of the one or more sensors 11 in the neighbouring lane 4b.

In further embodiments, the control arrangement 10 is configured to perform the method according to any one of the embodiments described in connection with Fig. 8.

The terminology used in the description of the embodiments as illustrated in the accompanying drawings is not intended to be limiting of the described method, control arrangement or computer program. Various changes, substitutions and/or alterations may be made, without departing from disclosure embodiments as defined by the appended claims.

The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g. a processor may fulfil the functions of several items recited in the claims.

The present disclosure is not limited to the above-described preferred embodiments. Various alternatives, modifications and equivalents may be used. Therefore, the above embodiments should not be taken as limiting the scope of the disclosure, which is defined by the appending claims.

## Claims

1. A method for operating an articulated vehicle (1) comprising a pulling vehicle (1a) and a trailer (1b) wherein the pulling vehicle (1a) comprises one or more sensors (11) arranged to monitor an environment of the articulated vehicle (1), the method comprising:

   - detecting (S2), in the monitored environment, an occluded region (3) in a neighbouring driving lane (4b), wherein the occluded region (3) is occluded by the trailer (1 b) from a field of view of the one or more sensors (11);
   - controlling (S3) the articulated vehicle (1) in its present driving lane (4a) in a view phase (VP) in which the pulling vehicle (1a) is steered towards the neighbouring lane (4b) to thereby momentarily removing the trailer (1b) from the field of view in the neighbouring lane (4b) of the one or more sensors (2).

2. The method according to claim 1, comprising determining (S1) an upcoming maneuver into the neighbouring lane (4b).

3. The method according to claim 2, comprising controlling (S3) the articulated vehicle (1) according to the view phase (VP) upon the determined (S1) upcoming maneuver into the neighbouring lane (4b) is hindered by the detected (S2) occluded region (3).

4. The method according to any one of the preceding claims, wherein the controlling (S3) the articulated vehicle (1) in its present driving lane (4a) comprises a space phase (SP) preceding the view phase (VP), wherein the space phase (SP) comprises steering the pulling vehicle (1a) away from the neighbouring lane (4b) to increase the space for the articulated vehicle (1) to perform the subsequent view phase (VP).

5. The method according to claim 4, wherein the controlling (S3) comprises performing the space phase (SP) upon a lateral distance (d) between an outer edge of the present driving lane (4a) and a farthest side of the pulling vehicle (1a) is greater than a set distance (pd).

6. The method according to any one of the preceding claims, comprising detecting (S2) the occluded region (3) while the articulated vehicle (1) is driving in a curve.

7. The method according to any one of the preceding claims, comprising operating (S3) the articulated vehicle (1) to perform a desired maneuver into the neighbouring lane (4b) based on the increased field of view of the one or more sensors (11) in the neighbouring lane (4b).

8. The method according to any one of the preceding claims, wherein the controlling (S3) in the view phase (VP) comprises steering the pulling vehicle (1a) towards the neighbouring lane (4b) including increasing an angle between the pulling vehicle (1a) and a driving direction of the present driving lane (4a) thereby momentarily removing the trailer from the field of view in the neighbouring lane (4b) of the one or more sensors (11).

9. The method according to any one of the preceding claims, wherein the controlling (S3) in the view phase (VP) comprises reducing an angle between the pulling vehicle (1a) and the trailer (1b) towards zero.

10. The method according to any one of the preceding claims, wherein the controlling (S3) comprises a straight phase (StP) following the view phase (VP) in which the pulling vehicle (1a) is steered to drive in the driving direction along the present lane (4a).

11. The method according to any one of the preceding claims, wherein the controlling (S3) is performed in consideration of one or more of traffic rules, velocity of the articulated vehicle (1), geometry of the articulated vehicle (1), steering dynamics, or lane geometry.

12. The method according to any one of the preceding claims, wherein the detecting (S2) comprises detecting properties defining the occluded region (3) such as distance and/or velocity.

13. The method according to any one of the preceding claims, wherein the one or more sensors (11) is configured to monitor the environment alongside the articulated vehicle (1).

14. A computer program comprising instructions which, when the computer program is executed by a computer, cause the computer to carry out the method according to any one of the preceding claims.

15. A computer-readable medium comprising instructions which, when executed by a computer, cause the computer to carry out the method according to any one of the claims 1 to 13.

16. A control arrangement (10) configured for operating an articulated vehicle (1) comprising a pulling vehicle (1a) and a trailer (1b) wherein the pulling vehicle (1a) comprises one or more sensors (11) arranged to monitor an environment of the articulated vehicle (1), wherein the control arrangement (10) is configured to:

- detect, in the monitored environment, an occluded region (3) in a neighbouring driving lane (4b), wherein the occluded region (3) is occluded by the trailer (1b) from a field of view of the one or more sensors (11);
- control the articulated vehicle (1) in its present driving lane (4a) in a view phase (VP) in which the pulling vehicle (1a) is steered towards the neighbouring lane (4b) to thereby momentarily increasing the field of view of the one or more sensors (11) in the neighbouring lane (4b).

17. An articulated vehicle comprising the control arrangement (10) according to claim 16.

FIG. 1A

FIG. 1B

FIG. 2

FIG. 3

FIG. 4

FIG. 5

FIG. 6

FIG. 7

FIG. 8

```
                              ┌──────────────────────────┐
                              │                          │
                              ▼                          │
              ⟋⟍   S1   ⟍                                │
            ⟋   Need for maneuver?  ⟍    No              │
            ⟍                       ⟋────────────┐       │
              ⟍                   ⟋              │       │
        ┌──────⟍  Yes          ⟋                 │       │
        │       ⟍           ⟋                    │       │
        ▲                                        │       │
        │        ⟋⟍   S2   ⟍                     │       │
   No   │      ⟋  Occluded region detected?  ⟍   │       │
        └──────⟍                            ⟋    │       │
                ⟍                         ⟋      │       │
                  ⟍   Yes              ⟋         │       │
                     ⟍             ⟋            │       │
```

┌─────────────────────────────────────────┐
│                   S3                     │
│                                          │
│         ⟋⟍                    ⟍          │
│       ⟋    Maneuver hindered by ⟍   No   │
│       ⟍    occluded region?   ⟋──────────┼───┐
│         ⟍                   ⟋            │   │
│            ⟍   Yes      ⟋                │   │
│               ⟍     ⟋                    │   │
│        ⟋⟍                    ⟍           │   │
│      ⟋   Possible to perform SP?  ⟍      │   │
│      ⟍                          ⟋────┐   │   │
│        ⟍  Yes              ⟋    No   │   │   │
│           ⟍            ⟋             │   │   │
│      ┌ ─ ─ ─ ─ ─ ─ ─ ┐              │   │   │
│      │   Perform SP   │              │   │   │
│      └ ─ ─ ─ ─ ─ ─ ─ ┘              │   │   │
│      ┌───────────────┐              │   │   │
│      │   Perform VS   │◄─────────────┘   │   │
│      └───────────────┘                  │   │
│      ┌ ─ ─ ─ ─ ─ ─ ─ ┐                  │   │
│      │   Perform StS  │                  │   │
│      └ ─ ─ ─ ─ ─ ─ ─ ┘                  │   │
└─────────────────────────────────────────┘   │
                   │                           │
┌─────────────────────────────────────────┐   │
│                   S4                     │   │
│  Operate the vehicle based on the increased  │◄──┘
│              field of view               │
└─────────────────────────────────────────┘
```

FIG. 10

```
┌────────────────────────────────┐
│  10                ┌───────────┐│
│                    │    103    ││
│                    └───────────┘│
│   ┌ ─ ─ ─ ─ ┐   ┌ ─ ─ ─ ─ ─ ─ ┐ │
│   │   101   │   │    102      │ │
│   └ ─ ─ ─ ─ ┘   │       'P'   │ │
│                 └ ─ ─ ─ ─ ─ ─ ┘ │
└────────────────────────────────┘
```

FIG. 9A

FIG. 9B

FIG. 9C

FIG. 9D

Europäisches
Patentamt
European
Patent Office
Office européen
des brevets

# EUROPEAN SEARCH REPORT

**Application Number**

EP 24 20 1937

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/287548 A1 (LAI TING-YU [US] ET AL) 16 September 2021 (2021-09-16) | 1-3,7, 10-17 | INV.<br>B62D15/02 |
| A | * paragraphs [0004], [0028], [0048], [0054], [0056], [0059] - [0063], [0068], [0075], [0080], [0088]; claims; figures * | 4-6,8,9 | B60R1/26<br>B60W30/09<br>G06V20/58<br>G08G1/16 |
| | ----- | | |
| Y | US 2020/139974 A1 (SCHREIBER MICHAEL [DE] ET AL) 7 May 2020 (2020-05-07) | 1-3,7, 10-17 | |
| A | * paragraphs [0023], [0025], [0045], [0046]; claims; figures * | 4-6,8,9 | |
| | ----- | | |

**TECHNICAL FIELDS SEARCHED (IPC)**

B62D
B60R
B60W
G08G
G06V

The present search report has been drawn up for all claims

| Place of search | Date of completion of the search | Examiner |
|---|---|---|
| The Hague | 20 February 2025 | Ducher, Alban |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 20 1937

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2025

| Patent document cited in search report | Publication date | Patent family member(s) | Publication date |
|---|---|---|---|
| US 2021287548 A1 | 16-09-2021 | NONE | |
| US 2020139974 A1 | 07-05-2020 | DE 102018218835 A1 | 07-05-2020 |
| | | KR 20200055634 A | 21-05-2020 |
| | | US 2020139974 A1 | 07-05-2020 |

EPO FORM P0459

For more details about this annex : see Official Journal of the European Patent Office, No. 12/82

**REFERENCES CITED IN THE DESCRIPTION**

**Patent documents cited in the description**

- US 2020139974 A1

- US 2020156633 A1

**Non-patent literature cited in the description**

- **R. RAJAMANI**. Vehicle Dynamics and Control, Mechanical Engineering Series. Springer, 2012